# EUROPÄISCHE PATENTSCHRIFT

(11) **EP 1 062 775 B1**
(45) Veröffentlichungstag und Bekanntmachung des Hinweises auf die Patenterteilung: **25.05.2005**
(21) Anmeldenummer: 99911697.3
(22) Anmeldetag: 23.02.1999
(51) Int. Cl.: H04L 12/44, H04L 12/26

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810292
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE); BERWANGER, Josef, D-85586 Poing (DE); GRIESSBACH, Robert, D-83629 Weyarn (DE); SMUK, Karel, D-85301 Schweitenkirchen (DE)
(74) Vertreter: Wesel-Mair, Julia
(86) Internationale Anmeldenummer: PCT/EP1999/001166
(87) Internationale Veröffentlichungsnummer: WO 1999/046895

(56) Entgegenhaltungen:
- US-A- 4 644 587

## Beschreibung

Die Erfindung bezieht sich auf einen Datenbus für mehrere Teilnehmer, die über einen Sternkoppler miteinander verbunden sind. Ein derartiger Datenbus ist aus der deutschen Patentanmeldung DE 19720401 A1 bekannt. Dabei sind die Teilnehmer über Sende-/Empfangsmodule am Datenbus angeschlossen.

Bei optischen Bussystemen können die Alterung der Sendedioden bzw. häufige Biegewechsel der Lichtwellenleiter bzw. deren Beschädigung zur Reduzierung der Lichtleistung an der Empfangsdiode und damit zu Störungen im Busverkehr führen. Ein solcher Fehler kann nicht automatisch erkannt und diagnostiziert werden.

Der Erfindung liegt die Aufgabe zugrunde, einen Datenbus der eingangs genannten Art zu schaffen, der die Möglichkeit bietet, eine Verschlechterung der Übertragungsqualität zu erkennen.

Die Erfindung löst diese Aufgabe mit den Mitteln des Patentanpruchs 1.

Eine Verschlechterung der optischen Übertragungsqualität kann vom Sende/Empfangsmodul erkannt werden. Diese Verschlechterung zeigt sich z.B. in einer zu hohen Dämpfung oder aber auch anhand der Differenz zwischen Dunkel- und Photo(=Nutz-) strom.

Bei der Erfindung handelt es sich darum, den Sender einer Qualitätskontrolle zu unterziehen. Hierzu wird jeder Sender in der genannten Weise überprüft. Dies hat nichts mit einer Kollisionserkennung zu tun, wie sie beispielsweise in der US 4,644,587 beschrieben ist und bei der das Auftreten des gleichzeitigen Sendebetriebs zweier Teilnehmer erkannt wird mit der Folge einer Unterbrechung der Datenübertragung für alle Teilnehmer.

Ein vorteilhafte Ausgestaltung der Erfindung ist im Patentanspruch 2 beschrieben. Dadurch kann die Häufigkeit einen fehlerhaften Datenübertragung bestimmt werden.

Eine weiter vorteilhafte Ausgestaltung der Erfindung ist im Patentanspruch 3 angegeben. Durch die Adressierbarkeit des Speicherglieds ist auf einfache Weise möglich zu erkennen, welche(r) Teilnehmer ursächlich für eine fehlerhafte Datenübertragung ist. Hierzu kann beispielsweise der Zustand des Speicherglieds über eine serielle Schnittstelle (z.B. SPI) durch einen dem Sternkoppfer zugeordneten Microcontroller ausgelesen werden.

Schließlich kann das Speicherglied beispielsweise nach einer fehlerfreien Übertragung oder aber auch nach dem Auslesen durch den Mikrocontroller zurückgesetzt werden. Ein anschließend nochmals auftretende fehlerhafte Datenübertragung kann erkannt und vom vorhergehenden Fehler unterschieden werden.

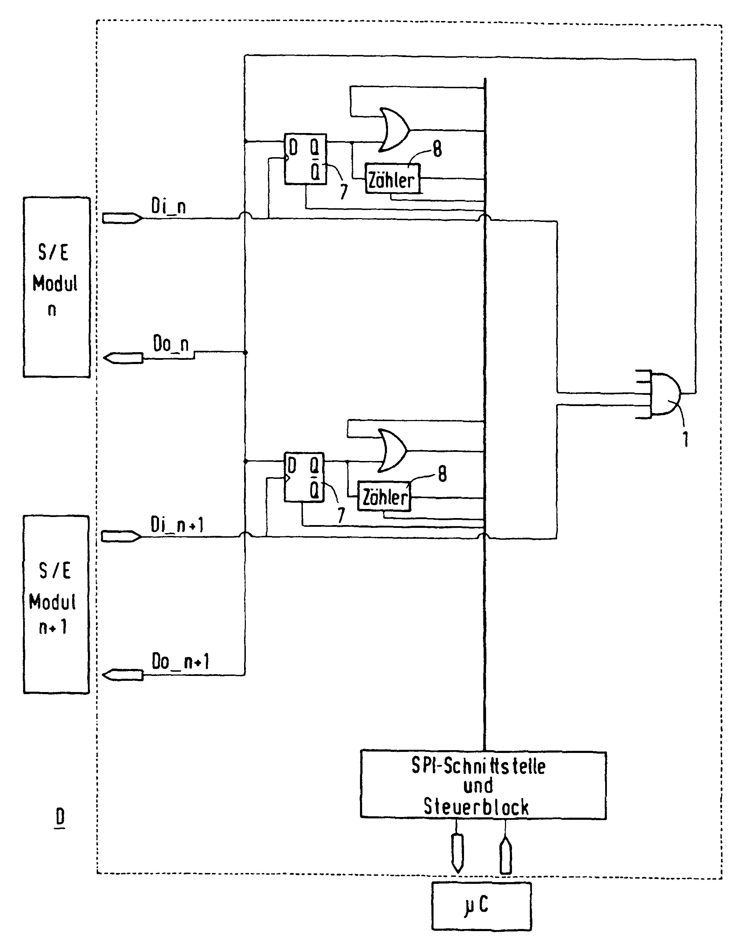

Anhand der einzigen Figur ist die Erfindung weiter erläutert. Darin ist ausschnittsweise ein erfindungsgemäßer Datenbus dargestellt, bei dem der Sendebetrieb der Teilnehmer überwacht wird.

An einem Datenbus D sind hier dargestellt zwei Teilnehmer Tₙ und Tₙ₊₁ über S/E (Sende/Empfangs-) Module S/Eₙ und S/Eₙ₊₁ angeschlossen. Die Module S/Eₙ und S/Eₙ₊₁ wandeln von den Teilnehmern Tₙ und Tₙ₊₁ kommende optische Telegramme in elektrische Form um und geben diese Signale Diₙ, Diₙ₊₁ als Eingangssignale auf ein logisches Entscheidungsglied (UND-Gatter 1) als zentraler Bestandteil eines Sternkopplers K weiter. Die Zahl der Eingänge des UND-Gatter 1 entspricht der Anzahl der Busteilnehmer. Der Ausgang des UND-Gatters treibt alle Eingänge (Doₙ, Doₙ₊₁) der Module S/Eₙ und S/Eₙ₊₁ . Diese wandeln diese elektrischen Signale in optische Signale um und übertragen diese optischen Signale über nicht dargestellte optische Übertragungstrecken zu den Teilnehmern Tₙ und Tₙ₊₁.

Eine Verschlechterung der optischen Übertragungsqualität (zu hohe Dämpfung, Differenz zwischen Dunkel- und Photostrom) kann vom Sende/Empfangsmodul S/Eₙ oder S/Eₙ₊₁ erkannt werden. Ein erkannter Fehler wird während eines Low-Pegels am optischen Dateneingang des Moduls durch einen kurzen Low-Impuls am Datenausgang dem Sternkoppler als zusätzliches Eingangssignal Di_n. Di_n+1 gemeldet.

Dieser Fehlerzustand wird an jedem Eingang des Sternkopplers in einem Puffer (7) gespeichert. Jedem Signaleingang wird ein Zähler (8) zugeordnet der während eines Übertragungsrahmens um eins incrementiert wird, wenn von dem zugehörigen S/E-Modul ein Fehler gemeldet wird. Die beschriebenen Zähler können über eine serielle Schnittstelle (z.B. SPI) von einem Microcontroller ausgelesen und zurückgesetzt werden. Mit dieser Funktion können die optischen Übertragungspfade von allen Busteilnehmern diagnostiziert werden

## Patentansprüche

1. Datenbus (D) für mehrere Teilnehmer (Tₙ,Tₙ₊₁), die über einen Sternkoppter miteinander verbunden sind,
**dadurch gekennzeichnet,**
**dass** die Teilnehmer über eine optische Übertragungstrecke mit nach-bzw. vorgeschalteten opto-elektrischen Wandlern (S/E nodul) am Sternkoppler angeschlossen sind und die Wandler Eingangssignale des Sternkopplers in elektrischer Form erzeugen, dass die Wandler derart ausgestaltert sind, daß sie zum Erkennen einer Verschlechterung der optischen Übertragungsqualität für das vom jeweiligen Teilnehmer über den Wandler auf den Sternkoppler gegebenen Telegramms die Änderung und/oder den Absolutwert des elektrischen Nutzsignals bestimmen und bei einer Abweichung um ein vorgegebenes Maß ein elektrisches Signal auf den Sternkoppler ausgeben.

2. Datenbus nach Anspruch 1, **gekennzeichnet durch** ein Speicherglied (7,8) für die Signale des einzelnen opto-elektrischen Wandlers.

3. Datenbus nach Anspruch 2, **dadurch gekennzeichnet, daß** das Speicherglied adressierbar ist.

4. Datenbus nach Anspruch 2 oder 3, **dadurch gekennzeichnet, daß** der Zustand des Speicherglieds auslesbar ist.

5. Datenbus nach einem der Ansprüche 2 bis 4, **dadurch gekennzeichnet, daß** die Speicherglieder rücksetzbar sind.

## Claims

1. A data bus (D) for a number of nodes (Tₙ, Tₙ₊₁) connected to one another via a star coupler,
**characterised in that**
the nodes are connected to the star coupler via an optical transmission line with downstream or upstream opto-electric transducers (S/E modules) and the transducers generate input signals of the star coupler in electric form, and **in that** the transducers are so constructed that in order to recognise an impairment in the optical transmission quality of a telegram delivered via the transducers to the star coupler, the transducers determine the change and/or the absolute value of the electric useful signal and, in the event of a deviation by a preset amount, output an electric signal to the star coupler.

2. A data bus according to claim 1, **characterised by** an element (7, 8) for storing the signals from the individual opto-electric transducer.

3. A data bus according to claim 2, **characterised in that** the storage element is addressable.

4. A data bus according to claim 2 or 3, **characterised in that** the state of the storage element can be read out.

5. A data bus according to any of claims 2 to 4, **characterised in that** the storage elements are resettable.

## Revendications

1. Bus de données (D) pour plusieurs noeuds (Tₙ, Tₙ₊₁) qui sont reliés par un coupleur en étoile,
**caractérisé en ce que**
les noeuds sont raccordés au coupleur en étoile au travers d'un trajet optique de transmission avec des convertisseurs opto-électriques (module E/R) en aval ou en amont, et les convertisseurs créent des signaux d'entrée du coupleur en étoile sous forme électrique, et les convertisseurs sont équipés de manière telle que, pour reconnaître une dégradation de la qualité optique de transmission du télégramme, transmis au coupleur en étoile par le convertisseur, par le noeud correspondant, ils déterminent la modification et/ou la valeur absolue du signal utile électrique et, lors d'un écart, fournissent un signal électrique d'une mesure prédéterminée au coupleur en étoile.

2. Bus de données selon la revendication 1,
**caractérisé par**
un organe de mémoire (7, 8) pour les signaux des différents convertisseurs opto-électriques.

3. Bus de données selon la revendication 2,
**caractérisé en ce que**
l'organe de mémoire est adressable.

4. Bus de données selon la revendication 2 ou 3,
**caractérisé en ce que**
l'état de l'organe de mémoire peut être lu.

5. Bus de données selon l'une quelconque des revendications 2 à 4,
**caractérisé en ce que**
l'organe de mémoire peut être initialisé.
